# EUROPÄISCHE PATENTSCHRIFT

(11) **EP 2 180 996 B1**
(45) Veröffentlichungstag und Bekanntmachung des Hinweises auf die Patenterteilung: **16.03.2011**
(21) Anmeldenummer: 08801580.5
(22) Anmeldetag: 14.08.2008
(51) Int. Cl.: B32B 27/08, B32B 27/30, B32B 27/18, C08L 33/12, C09D 133/12, C09D 7/12, C08K 3/22, B01J 35/00

(54) **FOLIE MIT PHOTOKATALYTISCH AKTIVER OBERFLÄCHE**
FILM HAVING A PHOTOCATALYTIC ACTIVE SURFACE
FEUILLE À SURFACE PHOTOCATALYTIQUEMENT ACTIVE

(30) Priorität: 22.08.2007 DE 102007039590
(43) Veröffentlichungstag der Anmeldung: 05.05.2010
(73) Patentinhaber: Renolit AG, 67547 Worms (DE)
(72) Erfinder: HEUKELBACH, Dirk, 64331 Weiterstadt (DE); THINNES, Klaus, 67574 Osthofen (DE)
(74) Vertreter: Wagner, Jutta
(86) Internationale Anmeldenummer: PCT/EP2008/006682
(87) Internationale Veröffentlichungsnummer: WO 2009/024285

(56) Entgegenhaltungen:
- EP-A- 0 343 491
- JP-A- 2007 313 705

## Beschreibung

Die vorliegende Erfindung betrifft Folien mit photokatalytisch aktiver Oberfläche und ihre Verwendung.

Folien finden seit vielen Jahren umfangreiche Anwendungen auch im Außenbereich. Zum einen finden Folien als solche z.B. als Planen, Markisen, Schwimmbadfolie oder Jalousien Einsatz, zum anderen werden sie als Beschichtung von Profilen oder Platten für Fenster, Türen, Rollläden, Klappläden, Fassadenelemente und anderen Bauelementen eingesetzt.

Die ersten Fenster aus Hart-Polyvinylchlorid (PVC) Profilen, wurden vor fast 50 Jahren auf den Markt gebracht. PVC-Profile haben große Vorteile im Hinblick auf die leichte Herstellbarkeit durch Extrusion, niedrige Kosten und gute Gebrauchseigenschaften. Der Anteil von PVC-Fenstern beträgt in Deutschland mehr als 50%, in Europa liegt er etwas darunter.

Es ist bekannt, auf die Oberfläche von Gegenständen wie z.B. Fensterprofilen, Türen, Gestellen, Gehäusen aus Kunststoff, Holz, Holzwerkstoffen, Metallen oder ähnlichen Werkstoffen eine eingefärbte oder gemusterte Oberflächenfolie aufzubringen, um auf diese Weise zum einen die Oberfläche der Gegenstände gegen schädliche Einflüsse, beispielsweise eine Verfärbung durch Licht und andere Wettereinwirkung oder vor mechanischen Einwirkungen, zu schützen, zum anderen die Oberfläche ansprechender zu gestalten. Beispielsweise kann durch Oberflächenkaschierung mit einer gemusterten Folie der Eindruck wertvollen Holzes erzeugt werden, auch wenn tatsächlich ein Ausgangsmaterial verwendet wird, das auf Grund seiner Beschaffenheit, Struktur, Oberfläche oder Farbe nicht geeignet wäre.

Derartige Oberflächenfolien müssen verschiedenste Anforderungen erfüllen. So bieten sie mechanischen Schutz, Schutz vor Angriffen von Agenzien aller Art, z.B. Wasser und Feuchtigkeit, bei Anwendungen im Freien, Schutz vor Wetter und Licht.

In den letzten Jahren ist in anderen Bereichen wie Glas oder Keramik eine weitere Vergütung der Oberfläche erreicht worden, indem die Oberfläche mittels einer feinen Strukturierung mit einem Selbstreinigungseffekt, auch Lotuseffekt genannt, versehen werden konnte. In Anlehnung an die bei Lotuspflanzen gefundene Oberfläche werden hierbei Strukturen aufgebracht, die im Zusammenwirken mit der Oberflächenspannung eine Benetzung der Oberfläche mit Wasser verhindern. Dadurch wird bei Regen oder Abspülen mit Wasser die Oberfläche von allen aufliegenden Partikeln gereinigt und wirkt stets oder zumindest sehr viel länger sauber.

Im Bezug auf Gläser, Keramik, aber auch Fassadenfarbe oder Putz ist dieses Prinzip durchaus wirksam. Versuche einer Übertragung auf die Kaschierfolien für Fenster scheiterten jedoch. Bereits nach kurzer Zeit der Beanspruchung in der Praxis werden die Oberflächenstrukturen an dem Kunststoff zerstört.

Ein weiterer Ansatz zur Schaffung von selbstreinigenden Oberflächen beruht auf dem Einsatz von Photokatalyse, mit welcher z.B. bei Ziegeln oder Bauteilen aus Zement die oberflächlichen Verschmutzungen durch chemische Reaktion, initiiert von Sonnenlicht und einem geeigneten Katalysator, beseitigt oder zumindest aufgehellt werden. Der gängigste Katalysator ist Titandioxid.

Auch dieser Ansatz versagt bei den üblichen Kaschierfolien aus Polyvinylchlorid (PVC), Acrylnitrilbutadienstyrol-Copolymeren (ABS) und ähnlichen gebräuchlichen Materialien, da diese durch den photochemischen Angriff depolymerisiert werden und dabei z.B. vergilben, spröde werden oder reißen. Bei dem weit verbreiteten Einsatz von Titandioxid als Farbpigment in Kunststoffen wird aus diesem Grund eine Beschichtung mit Silizium- und Aluminiumverbindungen vorgenommen, um bei Anwendungen im Freien den Angriff auf den Kunststoff zu verhindern.

Die Anforderungen an Folien, welche sich zur Kaschierung von Fensterprofilen und anderen, der Bewitterung ausgesetzten, Teilen eignen sollen, sind hoch. Insbesondere Witterungseinflüsse, wie starke Erwärmung im Sonnenlicht, UV-Strahlung, sowie Temperatur- und Feuchtigkeitswechsel beanspruchen die Folien stark. Sie müssen dennoch über Jahrzehnte ein einwandfreies Aussehen bewahren, zuverlässig mit den Profilen aus PVC, oder auch Holz, Metall oder anderen Kunststoffen wie Polyolefinen und ABS, verbindbar sein und dauerhaft mechanischen Belastungen standhalten, z.B. kratzbeständig sein.

Es besteht die Aufgabe, solche Folien mit einer selbstreinigenden Oberfläche auszustatten.

Überraschend wurde nun gefunden, dass es möglich ist, Mehrschichtfolien mit einer photokatalytisch aktiven Oberflächenschicht bereitzustellen, wenn der Photokatalysator in eine Folie bzw. Folienlage auf Basis von Methacrylatpolymeren eingebracht wird.

Die obige Aufgabe wird daher gelöst durch eine Folie, umfassend eine mit einem Profil verbindbare Substratschicht, eine Sperrschicht und eine Oberflächenschicht, basierend auf einem Polymethacrylat, wobei die Oberflächenschicht 0,1 bis 15 Gew.-% eines Photokatalysators, bezogen auf das Gesamtgewicht der Schicht, enthält.

Der Begriff "basierend auf" bedeutet im Rahmen der vorliegenden Erfindung in Bezug auf die Zusammensetzung von Folien bzw. Folienschichten, dass die genannte Folie bzw. Folienschicht im wesentlichen aus dem genannten Polymer oder der genannten Polymermischung besteht, wobei übliche Additive, Füllstoffe etc. in den jeweils bekannten Mengen und in einem nebengeordneten Anteil von bis zu 50 Gew.-%, in der Regel nicht mehr als 20 Gew.-% und insbesondere nicht mehr als 10 Gew.-% andere Polymere zugesetzt sein können. Im Speziellen sind (abgesehen von z.B. herstellungsbedingten Verunreinigungen) gar keine anderen Polymere enthalten.

Soweit nichts anderes angegeben ist, umfasst der Begriff Polymer Homo- und Copolymere sowie Mischungen aus zwei oder mehr Polymeren. In der Regel weisen Polymere eine Molmasse von mindestens 10.000, typischerweise von einigen 10.000 bis einigen 100.000 g/mol auf. Bei Copolymeren kann es sich z.B. um statistische, alternierende, Block- sowie Pfropfcolpolymere handeln.

Der Begriff "Folie" bezeichnet im Rahmen der vorliegenden Erfindung flächige Gebilde, deren Breite und Länge die Dicke um ein vielfaches übersteigt. Die Dicke beträgt in der Regel unter einem Millimeter bis hin zu wenigen Mikrometern.

Sofern nichts Spezielles angegeben ist, kann eine Folie einschichtig oder mehrschichtig, z.B. zwei-, drei- oder vierschichtig sein. Die einzelnen Schichten oder Lagen können durch Kalandrieren, Extrusion, Koextrusion, Extrusionsbeschichtung hergestellt und/oder durch verschiedene Laminierverfahren, wie Kleben, Thermobonding und Ähnliches, verbunden sein. Die Verbindung erfolgt beim Laminieren über die ganze oder im wesentlichen ganze Fläche.

Mit dem Begriff "Profil" wird im Rahmen der vorliegenden Erfindung ein konstruktives Bauteil wie z.B. ein Fensterprofil, Türrahmen, Zaunelement. Geländer, Gehäuse, Wandelement, Möbel etc. verstanden. Die Profile basieren vorzugsweise auf PVC, können aber auch auf anderen Kunststoffen basieren oder aus Holz, Metall oder zwei oder mehreren der genannten Materialien bestehen. So ist bei Fensterprofilen Aluminium und/oder PVC ein typischer Werkstoff.

Die erfindungsgemäße Folie soll nach an sich üblichen Verfahren auf solche Profile aufkaschiert werden können. Dies legt die Anforderungen an die mechanischen Folieneigenschaften fest und bestimmt auch die möglichen Materialien für die unterste, mit dem Profil zu verbindende Schicht der Folie.

Die erfindungsgemäße Folie weist mindestens drei Schichten auf, eine erste mit dem Profil verbindbare Schicht, die als Substratschicht bezeichnet wird, eine oberste Schicht, welche die äußere Oberfläche der Folie bildet, und eine Zwischenschicht, die als Sperrschicht bezeichnet wird. Es können weitere Schichten hinzukommen, wobei entweder die Funktion einer Schicht durch zwei Lagen übernommen wird oder aber die weitere(n) Schicht(en) eigene Funktionen haben.

Es hat sich außerdem herausgestellt, dass die erfindungsgemäßen Folien auch an sich vorteilhaft z.B. als Plane verwendet werden können. So lassen sich LKW-Planen, Markisen, Zeltplanen und viele Planen für Anwendungen im Freien mehr mit einer Selbstreinigungsfunktion ausstatten. In diesem Fall übernimmt die Substratschicht die Trageigenschaften, d.h. sie stellt sicher, dass die mechanischen Anforderungen erfüllt sind. Alternativ kann auch eine zusätzliche Tragschicht vorgesehen sein.

Die Substratschicht wird bei Kaschierfolien erfindungsgemäß so ausgewählt, dass sie in den üblichen Kaschierverfahren mit dem Profil verbindbar ist. Je nach Material des Profils eignen sich dazu naturgemäß verschiedene Polymere. Bei Kunststoffprofilen enthält die Substratschicht in einer bevorzugten Ausführungsform denselben Kunststoff wie das Profil.

Für Profile, die auf PVC basieren, eignen sich besonders Substratschichten, die auf PVC, Acrylaten, Styrolpolymeren, Acrylnitril-Styrol-Acrylat-Terpolymeren, Acrylnitril-Butadien-Styrol-Terpolymeren oder Polyolefinen basieren. Die Substratschicht übernimmt die dekorativen Funktionen der Kaschierfolie und ist daher in der Regel pigmentiert und/oder bedruckt.

Die Dicke der Substratschicht liegt in der Regel im Bereich von 25 bis 1000 µm, vorzugsweise von 60 bis 1000 µm. Die Substratschicht kann neben den Pigmenten auch übliche Additive, Füllstoffe etc. enthalten.

Gut geeignet sind beispielsweise Substratschichten auf Basis von PVC mit einem k-Wert im Bereich von 60 bis 90 oder auch Gemische solcher Polyvinylchloride. Typischerweise werden 65 bis 100 Teile PVC mit 35 bis 0 Teilen Weichmacher gemischt und auf 100 Teile dieser Mischung 1 bis 5 Teile Stabilisator und/oder 0,1 bis 1,5 Teile Gleitmittel zugefügt. Zur Pigmentierung werden 1,0 bis 15 Gewichtsteile Pigment oder Pigmentgemisch beigemischt. Eine typische Rezeptur ist:

| | |
|---|---|
| PVC (z.B. k-Wert 65) | 65 bis 100 Teile |
| Weichmacher (z.B. Phthalat) | 35 bis 0 Teile |
| Stabilisator (z.B. Ba/Zn, Ca/Zn, Sn) | 2 Teile |
| Gleitmittel (z.B. Fettsäurederivat) | 0,7 Teile |
| Pigmente | 1 bis 15 Teile |

Ebenfalls gut geeignet sind Substratschichten auf Acrylatbasis, beispielsweise aus einem Blend von Polymethylmethacrylat und Polybutylacrylat. Hier werden typischerweise auf 100 Teile Polymer 1 Teil Antioxidantien und/oder 1 Teil Gleitmittel sowie 1 bis 15 Teile Pigment oder Pigmentgemisch eingesetzt. Eine typische Rezeptur ist:

| | |
|---|---|
| Blend PMMA/PBA | 95 Teile |
| PMMA (Molgewicht 80.000 - 200.000 g/mol) | 5 Teile |
| Antioxidantien | 1 Teil |
| Gleitmittel | 1 Teil |
| Pigmente | 1 bis 15 Teile |

Die Sperrschicht basiert vorzugsweise auf einem Polymethacrylat. Als Polymethacrylat eignen sich beispielsweise Polymethylmethacrylat und andere Polymethacrylate, sowie insbesondere Mischungen verschiedener Polymethacrylate und/oder Methacrylat-Copolymere.

Vorzugsweise enthält die Sperrschicht eine oder mehrere UV-Strahlung absorbierende Substanzen, wie eine Pigmentierung mit organischen UV-Absorbern, beschichtetem feinteiligen ZnO, SiO₂. Weiterhin können Additive wie z.B. Pigmentbenetzer, Verlaufsmittel und/oder Füllstoffe enthalten sein. Eine typische Rezeptur ist:

| | |
|---|---|
| PMMA (z.B. Molgewicht 300.000 g/mol) | 75 Teile |
| PMMA (z.B. Molgewicht 80.000 g/mol) | 25 Teile |
| Antioxidantien | 1,5 Teile |
| UV-Absorber (organisch) | 1 Teil |
| UV-Absorber (anorganisch) | 3,5 Teile |

Diese Sperrschicht lässt sich als Lack auftragen, beispielsweise 25 Gew.-% PMMA gelöst in einem Gemisch von Ethylacetat/Methylethylketon/Butylacetat.

Die Dicke der Sperrschicht ist so bemessen, dass die vom Photokatalysator in der Oberflächenschicht abgegebene Energie ebenso wie UV-Strahlung des Sonnenlichtes nicht zu der darunter liegenden Substratschicht gelangen. Damit wird diese effektiv geschützt und kann im Material an die mechanisch-technischen und dekorativen Erfordernisse angepasst werden. Dicken von 1 bis 50 µm haben sich bewährt.

Die Oberflächenschicht basiert auf Polymethacrylat und enthält den Photokatalysator. Die Dicke liegt typischerweise im Bereich von 10 bis 50 µm. Neben dem Photokataysator können auch übliche Additive, UV-Absorber, Füllstoffe etc. enthalten sein, beispielsweise 0,1 bis 2,0 Gew.-% beschichtetes oder unbeschichtetes ZnO und/oder 0,1 bis 5,0 Gew.-% SiO₂. Gewünschtenfalls können auch Pigmente und/oder Farbstoffe enthalten sein. Eine typische Rezeptur für die Oberflächenschicht ist:

| | |
|---|---|
| PMMA (Molgewicht 300.000 g/mol) | 80 Teile |
| PMMA (Molgewicht 80.000 g/mol) | 20 Teile |
| Photokatalysator (Titandioxid) | 3,5 Teile |
| Antioxidantien | 1,5 Teile |

Diese Schicht lässt sich gut als Lack auftragen, beispielsweise 20 Gew.-% PMMA gelöst in einem Gemisch von Ethylacetat/Methylethylketon/Butylacetat.

In einer weiteren Ausführungsform kann die Oberflächenschicht ihrerseits mehrlagig, z.B. zweilagig ausgebildet sein, wobei eine oberste Lage mit einem höheren Photokatalysatorgehalt und eine darunter liegende Lage mit einem geringeren Photokatalysatorgehalt vorhanden ist.

In diesem Fall kann eine oberste Lage z.B. aus 100 Teilen PMMA mit einem Molgewicht von 80 000 g/mol und 10 Teilen Photokatalysator bestehen. Eine solche Schicht lässt sich gut als Lack auftragen, beispielsweise 30 Gew.-% PMMA gelöst in einem Gemisch von Ethylacetat/Methylethylketon/Butylacetat. In einer solchen Schicht kann auch ein depolymerisierender Zusatz vorgesehen werden, um die photokatalytische Aktivität durch schnellere Freilegung von Katalysatorpartikeln zu steigern.

Der Photokatalysator wird durch Sonnenstrahlung angeregt und initiiert dann die Zersetzung von anhaftenden Verunreinigungen bzw. die Bildung von Radikalen aus Wasser und Luftsauerstoff, welche ihrerseits die Zersetzung von anhaftenden Verunreinigungen initiieren.

Als Photokatalysator eignet sich insbesondere feinteiliges Titandioxid, d.h. Titandioxid in der Rutil- oder Anatasmodifikation mit Teilchengrößen im Bereich von 1 bis 100 nm, vorzugsweise 10 nm bis 100 nm. Selbstverständlich darf das Titandioxid nicht mit einer Beschichtung (Coating) versehen sein, welche die photokatalytische Aktivität blockiert, insbesondere handelt es sich um unbeschichtetes Titandioxid. Es ist auch möglich, Mischungen verschiedener Photokatalysatoren zu verwenden.

Etwaige Verfärbungen durch den Photokatalysator oder andere Bestandteile lassen sich in an sich bekannter Weise, wie durch Zusatz von Pigmenten, korrigieren.

Die Substrat- und/oder Sperrschicht kann ebenfalls aus zwei oder mehreren verschiedenen Lagen bestehen. So kann z.B. die Sperrschicht aus zwei Lagen bestehen, wobei die Zusammensetzungen der Lagen verschieden sind und dadurch die Haftung mit der jeweils benachbarten Schicht optimiert ist.

Die erfindungsgemäßen Kaschierfolien sind witterungsbeständig, d.h. sie zeigen auch bei Einwirkung von UV-Strahlung, hohen und tiefen Temperaturen sowie Feuchtigkeit und Wasser keine wesentlichen Änderungen der Eigenschaften. Die Folien weisen typischerweise folgende Eigenschaften auf:

| | |
|---|---|
| Dicke (DIN EN ISO 2286-3, Druckstempel Durchmesser 10 mm mit planebener Fläche, Druck 50 kPa, Messung über Prägung) | 200 µm |
| Bruchspannung (DIN EN ISO 527-3) | > 15 MPa, vorzugsweise > 20 MPa |
| Bruchdehnung (DIN EN ISO 527-3) | > 10 %, vorzugsweise > 100 % |
| Maßbeständigkeit (DIN 53377, 15 Min./ 100 °C) | Änderung < 4%, vorzugsweise < 2 % |
| Wetterbeständigkeit (EN 513 - Verfahren 1, Graumaßstab gemäß ISO 105 - A03) | Farbänderung ≤ Graumaßstab 4 bei einer Bestrahlung von 8 GJ / m² gemäß Anforderung RAL GZ 716 / 1 Teil 7 |
| Feuchtigkeitsbeständigkeit (DIN 50017 KFW) | Farbänderung ≤ Graumaßstab 3 |
| Reibechtheit (ISO 105 - X 12) | Note 5 |

Die Herstellung der erfindungsgemäßen Folien erfolgt in an sich bekannter Weise. Die Substratschicht kann z.B. durch Kalandrieren oder Extrudieren hergestellt werden. Die weiteren Schichten können durch Lackieren, durch Koextrusion, Extrusionsbeschichtung, durch Laminieren oder Prägen aufgebracht werden. Es ist möglich, dass zwei Schichten koextrudiert werden und die dritte oder weitere Schichten mittels Prägen, Laminieren verbunden werden.

In einer ersten bevorzugten Variante werden alle Schichten koextrudiert.

In einer weiteren bevorzugten Variante werden Substrat- und Sperrschicht koextrudiert und die Oberflächenschicht mittels Lackieren oder Extrusionsbeschichtung aufgebracht.

In einer dritten bevorzugten Ausführungsform wird die Substratschicht kalandriert oder extrudiert und die Sperrschicht sowie die Oberflächenschicht wird mittels Lackieren aufgebracht.

Es ist bevorzugt, wenn im Anschluss an die Herstellung der Folie die Photokatalysatorpartikel in deren Oberfläche freigelegt werden. Dies kann durch verschiedene, an sich bekannte Verfahren der Oberflächenbehandlung von Folien erfolgen, z.B. UV-Bestrahlung, Elektronenstrahlung, Corona-Behandlung, Beflammung, Plasma-Behandlung, oder mechanische, spanende Verfahren zur Oberflächenbehandlung wie Sandstrahlen, Schleifen etc. Durch diese Behandlung wird der katalytische Effekt schneller wirksam, da die freigelegten Partikel direkt an der Oberfläche vorliegen und somit in Kontakt mit den zu beseitigenden Verunreinigungen stehen.

Bei der Ausführungsform mit einer zweilagigen Oberflächenschicht ist es von Vorteil, dass durch den höheren Gehalt an Photokatalysator in der obersten Lage eine solche Behandlung entfallen kann.

Die erfindungsgemäßen Folien ergeben nach dem Aufkaschieren auf Profile Bauteile mit selbstreinigender Oberfläche. Daher betrifft die Erfindung auch die Verwendung von Folien zur Herstellung von Bauteilen mit selbstreinigender Oberfläche, umfassend eine mit einem Profil verbindbare Substratschicht, eine Sperrschicht und eine Oberflächenschicht basierend auf einem Polymethacrylat, wobei die Oberflächenschicht 0,1 bis 15 Gew.-% eines Photokatalysators, bezogen auf das Gesamtgewicht der Schicht, enthält.

Dies ist von großem Vorteil für Bauteile wie Fenster, Zäune usw. bei denen eine Reinigung oftmals mühsam und im Falle von Fenstern teilweise auch unfallträchtig ist. Die erfindungsgemäß hergestellten Bauteile haben die Eigenschaft, durch das auftreffende Sonnenlicht anhaftende Verunreinigungen zu zersetzen oder aufzuhellen, so dass eine Reinigung viel seltener nötig ist oder ganz entfallen kann. Die bekannten Vorteile von Kaschierfolien, wie Kratzfestigkeit, dekoratives Aussehen etc. bleiben voll erhalten.

Der Kaschiervorgang als solcher ist dem Fachmann bekannt. Üblicherweise werden Profil und Folie kontinuierlich einer Vorrichtung zugeführt, die beide mittels Klebstoff verbindet. Sowohl Folie als auch Profil können ggfs. vorher gereinigt, einer Corona-Behandlung unterzogen und/oder erwärmt werden. Als Klebstoff werden derzeit meist Schmelzklebstoffe eingesetzt, z.B. reaktive Polyurethanklebstoffe Nach dem Klebstoffauftrag werden Folie und Profil verpresst, wobei das Laminat erhalten wird. Dieses kann ggfs. noch getempert oder anderweitig nachbehandelt werden.

Wie bereits erwähnt, eignen sich die erfindungsgemäßen Folien aber auch für andere Zwecke.

So können Planen z.B. für LKW, Markisen oder Zelte daraus hergestellt werden. In diesem Fall wird die Substratschicht nicht an einen Kaschiervorgang, sondern an die notwendigen mechanischen Eigenschaften der Plane angepasst. Es ergibt sich eine vorteilhafte, weil selbstreinigende Plane.

Eine weitere Anwendung sind Folien zur Herstellung von Schwimmbecken. Bei dieser Anwendung kann der Reinigungsaufwand deutlich vermindert werden. Wichtig ist hier, dass die Substratschicht die Wasserdichtigkeit sowie wiederum die mechanischen Eigenschaften gewährleistet.

Die folgenden Beispiele sollen die Erfindung näher veranschaulichen, ohne sie jedoch auf die konkret beschriebenen Ausführungsformen zu begrenzen. Soweit nichts anderes angegeben ist, beziehen sich sämtliche Angaben von % oder Teilen auf das Gewicht.

### Beispiel 1

Es wurde eine Folie mit den folgenden drei Schichten hergestellt: Substratschicht:

| | |
|---|---|
| S-PVC | 80 Teile |
| Weichmacher | 20 Teile |
| Stabilisator Ba/Zn flüssig | 2,1 Teile |
| Titandioxid, Rutiltyp, gecoatet | 12 Teile |

Die Zusammensetzung wird zu einer Folie mit einer Schichtdicke von 80 µm kalandriert.

### Sperrschicht:

| | |
|---|---|
| PMMA (Molgewicht 300 000 g/mol) | 15 Teile |
| Ethylacetat | 37 Teile |
| 2-Butanon | 37 Teile |
| Butylacetat | 11 Teile |
| UV-Absorber organisch | 0,6 Teile |
| ZnO, Nano-Type gecoatet | 0,5 Teile |
| SiO₂ | 0,5 Teile |

Die Schicht wird mittels Lackauftrag als Lösung mit Rakel, 30 µm Spaltweite, auf die Substratschicht aufgebracht. Die Schichtdicke nach dem Trocknen beträgt 3 - 5 µm.

### Oberflächenschicht:

| | |
|---|---|
| PMMA (Molgewicht 80 000 g/mol) | 25 Teile |
| Ethylacetat | 30 Teile |
| 2-Butanon | 30 Teile |
| Butylacetat | 15 Teile |
| TiO₂ Nano - Anatas -Typ | 1,0 Teile |
| ZnO Nano Type ungecoatet | 0,5 Teile |
| SiO₂ | 0,5 Teile |

Die Schicht wird mittels Lackauftrag als Lösung mit Rakel, 30 µm Spaltweite, auf die Sperrschicht aufgebracht. Die Schichtdicke nach dem Trocknen beträgt 5 - 7 µm.

Nach der Trocknung der Oberflächenschicht wurde die Folie an der Oberflächenschicht mit einer Corona - Entladung (Gerät der Firma Ahlbrandt System GmbH, Lauterbach, DE) behandelt. Es erfolgten 3 Behandlungsdurchgänge, Geschwindigkeit jeweils 10 cm/s.

### Beispiel 2

Analog zu Beispiel 1 wurde eine Folie mit den folgenden vier Schichten hergestellt:
Substratschicht: extrudiert

| | |
|---|---|
| Blend PMMA/PBA - Pulver | 90 Teile |
| PMMA (Molgewicht 80 000 g/mol) | 10 Teile |
| Antioxidantien | 2,0 Teile |
| Gleitmittel | 0,5 Teile |
| Titandioxid, Rutiltyp, gecoatet | 10 Teile |
| Schichtdicke 130 µm | |

Sperrschicht:

| | |
|---|---|
| PMMA (Molgewicht 300 000 g/mol) | 15 Teile |
| Ethylacetat | 37 Teile |
| 2-Butanon | 37 Teile |
| Butylacetat | 11 Teile |
| UV-Absorber organisch | 0,6 Teile |
| ZnO, NanoType gecoatet | 0,5 Teile |
| SiO₂ | 0,5 Teile |

Lackauftrag mit Rakel, 15 µm Spaltweite, Schichtdicke trocken 3 - 5 µm.

### Oberflächenschicht untere Lage:

| | |
|---|---|
| PMMA (Molgewicht 300 000 g/mol) | 15 Teile |
| Ethylacetat | 35 Teile |
| 2-Butanon | 35 Teile |
| Butylacetat | 15 Teile |
| TiO₂ Nano - Anatas -Typ | 1,0 Teile |
| ZnO Nano Type ungecoatet | 0,5 Teile |
| SiO₂ | 0,5 Teile |

Lackauftrag mit Rakel, 30 µm Spaltweite, Schichtdicke trocken 5 -7 µm.

### Oberflächenschicht obere Lage:

| | |
|---|---|
| PMMA (Molgewicht 80 000 g/mol) | 25 Teile |
| Ethylacetat | 30 Teile |
| 2-Butanon | 30 Teile |
| Butylacetat | 15 Teile |
| TiO₂ Nano - Anatas -Typ | 5,0 Teile |
| ZnO Nano Type ungecoatet | 0,5 Teile |
| SiO₂ | 0,5 Teile |

Lackauftrag mit Rakel, 30 µm Spaltweite, Schichtdicke trocken 5 -7 µm.

Nach der Trocknung der Oberflächenschicht wurde die Folienoberfläche mit einer Corona - Entladung (Gerät der Firma Ahlbrandt System GmbH, Lauterbach, DE) behandelt. Es erfolgten 3 Behandlungsdurchgänge, Geschwindigkeit jeweils 10 cm/s.

### Beispiele 3 bis 8

Analog zu Beispiel 1 wurden weitere Folien hergestellt, mit den in der folgenden Tabelle 1 genannten Zusammensetzungen.

| Folie Nr. | Substratschicht | Sperrschicht | Oberflächenschicht | Pigment in oberer Schicht | Gehalt TiO₂ |
|---|---|---|---|---|---|
| 1 | PVC-Folie kalandriert, weiß pigmentiert | ./. | ./. | TiO₂ Rutil gecoatet, | 12 % |
| 2 | PVC-Folie, kalandriert, weiß pigmentiert | 5 µm PMMA-Trennschicht | 5 µm PMMA-Lackschicht, | nanoskaliges Anatas-Titandioxid | 1,0 % |
| 3 | PVC-Folie, kalandriert, weiß pigmentiert | 5 µm PMMA-Trennschicht | 5 µm PMMA-Lackschicht, | nanoskaliges Anatas-Titandioxid | 2,0 % |
| 4 | PVC-Folie, kalandriert, weiß pigmentiert | 5 µm PMMA-Trennschicht | 5 µm PMMA-Lackschicht, | nanoskaliges Anatas-Titandioxid | 4,0 % |
| 5 | PVC-Folie, kalandriert, weiß pigmentiert | 5 µm PMMA- 5 Trennschicht | µm PMMA-Lackschicht | nanoskaliges Anatas-Titandioxid | 10 % |
| 6 | PVC-Folie, kalandriert, weiß pigmentiert | 5 µm PMMA-Trennschicht | 5 µm PMMA-Lackschicht, | nanoskaliges Anatas-Titandioxid | 40 % |

Diese Folien wurden folgenden Tests unterzogen.

Als Maß für allgemeine Benetzungsfähigkeit wurde die Oberflächenspannung indirekt über eine Randwinkelbeurteilung mit verschiedenen Flüssigkeiten, sogenannten Testtinten, verschiedener Oberflächenspannung gemessen. Diese Testtinten sind Gemische aus Wasser und Alkohol. Ein Randwinkel bildet sich nur aus, wenn die Oberflächenspannung der Messflüssigkeit größer als die des festen Substrats ist. Ist die Oberflächenspannung der Messflüssigkeit gleich oder kleiner als die Oberflächenspannung des Substrats, findet eine vollständige Spreitung (Randwinkel = 0°) statt.

Als Maß für Benetzungsfähigkeit speziell von Wasser wurde der Randwinkel zwischen der Folienoberfläche und Wasser gemessen, indem im "sessile drop" - Verfahren ein Wassertropfen - mit bekannter Oberflächenspannung - mit einer Pipette auf das Foliensubstrat gesetzt wird und der Randwinkel optisch mittels Goniometer bestimmt wird.

Als Maß für die Witterungsbeständigkeit und die Selbstreinigung wurde mit farbmetrischen Methoden die Farbänderung der Folie bestimmt. Die Farbmetrik versucht mittels mathematischer Formeln, das visuelle Ergebnis einer Farbbetrachtung oder eines Farbvergleichs zahlenmäßig darzustellen. ΔE gibt den empfundenen Abstand zweier Farbproben an. Damit sollen Unterschiede zwischen zwei Farben, zum Beispiel zwischen unverschmutzter Originalfolie und verschmutzter Folie, entsprechend der Empfindung wie stark der Unterschied ist, mit Zahlenwerten versehen werden. Ziel ist es, für eine Unterschiedsempfindung einen Zahlenwert zu erhalten, um den Farbunterschied kommunizieren zu können. Dabei entspricht ein ΔE von 1 einem geringen, aber sichtbaren Unterschied. Ein ΔE von 5 ist deutlich sichtbar.
a) Freibewitterung:
   Die zu prüfenden Folien wurden auf einem Prüfgestell 45 Tage der Witterung ausgesetzt. Die Neigung des Gestells betrug 45 ° nach Süden, die Aufstellung erfolgte in einem Gebiet mit Industrieatmosphäre.
b) Simulierte Bewitterung
   Die Bewitterung erfolgte in einem Prüfgerät Xenotest 1200, die Prüfdauer betrug 500 h (Beschleunigung: 1000 h entsprechen ca. 1 Jahr Freibewitterung). In dem Gerät herrschten folgende Bedingungen: Strahlung: gefiltertes Xenon-Bogen-Licht, Luft gefiltert, Zyklus Licht/Beregnung mit Wasser 108/12 Minuten.

Als Maß für die Fähigkeit zur Selbstreinigung in Bezug auf organische Verunreinigungen wurde der Resazurintest durchgeführt. Der blaue Resazurinfarbstoff zeigt als Redoxindikator durch irreversiblen Farbumschlag zum pinkfarbenen fluoreszierenden Resorufin chemische Reaktion und Aktivität an, hier die Redoxreaktion der Photoaktivität durch TiO₂.

Die Ergebnisse der Untersuchungen fasst die folgende Tabelle zusammen.

| | Folie 1 | Folie 2 | Folie 3 | Folie 4 | Folie 5 | Folie 6 |
|---|---|---|---|---|---|---|
| Oberflächenspannung | 36 | 38 | 38+ | 41- | 41 | 41 |
| Testtinte [dyn/cm] | | | | | | |
| Randwinkel [°] | 88 | 73 | 69 | 65 | 72 | 66 |
| Farbänderung Delta E | 5 | 0.5 | 0,5 | 0,5 | 0 | 0 |
| Freibewitterung | | | | | | |
| Farbänderung Delta E | 0 | 0 | 0 | 0 | 0 | 0 |
| Xenotest | | | | | | |
| Resazurintest | negativ | positiv | positiv | positiv | positiv | positiv |

Es ist klar zu erkennen, dass die zum Vergleich herangezogene Folie ohne photokatalytische Oberflächenschicht während der Freibewitterung in erheblichem Maße verunreinigt wird. Die Farbänderung beruht hierbei aber nicht auf einer witterungsbedingten Alterung, da im Xenotest keinerlei Farbänderung beobachtet wird. Der Resazurintest bestätigt diese Ergebnisse; während die Vergleichsfolie keinen Effekt zeigt, erfolgt bei sämtlichen Konzentrationen an Photokatalysator der erfindungsgemäßen Folien 2 bis 6 eine Pinkfärbung, d.h. die erfindungsgemäßen Folien besitzen eine photokatalytisch aktive Oberfläche. Aufgrund der photokatalytisch aktiven Oberfläche erfolgt ein Abbau von anhaftenden Verunreinigungen bei Bestrahlung mit Sonnenlicht und damit eine Selbstreinigung.

## Patentansprüche

1. Witterungsresistente Folie, umfassend eine Substratschicht, eine Sperrschicht und eine Oberflächenschicht basierend auf einem Polymethacrylat, **dadurch gekennzeichnet, dass** die Oberflächenschicht 0,1 bis 15 Gew.-% eines Photokatalysators bezogen auf das Gesamtgewicht der Schicht enthält.

2. Folie gemäß Anspruch 1, **dadurch gekennzeichnet, dass** die Substratschicht eine mit einem Profil aus Kunststoff, Holz, Metall oder zwei oder mehreren der genannten Materialien verbindbare Schicht ist.

3. Folie gemäß Anspruch 1 oder 2, **dadurch gekennzeichnet, dass** die - Substratschicht auf Polyvinylchlorid, Acrylatpolymer, Styrolpolymer, Acrylnitril-Styrol-Acrylat-Terpolymer, Acrylnitril-Butadien-Styrol-Terpolymer, Polyolefin oder Mischungen verschiedener Polyvinylchloride, Acrylatpolymere, Styrolpolymere, Acrylnitril-Styrol-Acrylat-Terpolymere, Acrylnitril-Butadien-Styrol-Terpolymere, Polyolefine oder Mischungen der genannten Polymere basiert.

4. Folie gemäß Anspruch 3, **dadurch gekennzeichnet, dass** die Substratschicht aus 65 bis 100 Gewichtsteilen Polyvinylchlorid(en) mit 0 bis 35 Gewichtsteilen Weichmacher und auf 100 Gewichtsteile dieser Mischung 1 bis 5 Gewichtsteilen Stabilisator und/oder 0,1 bis 1,5 Gewichtsteilen Gleitmittel sowie 1,0 bis 15 Gewichtsteilen Pigment oder Pigmentgemisch besteht.

5. Folie gemäß Anspruch 3, **dadurch gekennzeichnet, dass** die Substratschicht aus 100 Gewichtsteilen Polymethacrylat oder einem Gemisch von Polyacrylaten und 1 Gewichtsteil Antioxidantien und/oder 1 Gewichtsteil Gleitmittel sowie 1 bis 15 Gewichtsteilen Pigment oder Pigmentgemisch besteht.

6. Folie gemäß mindestens einem der Ansprüche 1 bis 5, **dadurch gekennzeichnet, dass** die Sperrschicht auf einem Polymethacrylat basiert.

7. Folie gemäß mindestens einem der Ansprüche 1 bis 6, **dadurch gekennzeichnet, dass** die Sperrschicht eine oder mehrere UV-Strahlung absorbierende Substanzen und/oder andere Additive enthält.

8. Folie gemäß Anspruch 6, **dadurch gekennzeichnet, dass** die Sperrschicht aus 100 Gewichtsteilen Polymethylmethacrylat/sowie 1 bis 10 Gewichtsteilen UV-Absorber oder UV-Absorber-Gemisch und ggfs. 1 - 5 Gewichtsteilen Additiven und/oder 1 - 10 Gewichtsteilen Füllstoffen besteht.

9. Folie gemäß mindestens einem der Ansprüche 1 bis 8, **dadurch gekennzeichnet, dass** die Oberflächenschicht aus 100 Gewichtsteilen Polymethylmethacrylat oder Gemischen aus Polymethylmethacrylat mit anderen Polymethacrylaten und 1 bis 10 Gewichtsteilen Photokatalysator sowie ggfs. 1 - 5 Gewichtsteilen Additiven und/oder 1 - 10 Gewichtsteilen Füllstoffen besteht.

10. Folie gemäß mindestens einem der Ansprüche 1 bis 9, **dadurch gekennzeichnet, dass** die Oberflächenschicht zweilagig aufgebaut ist, wobei der Gehalt an Photokatalysator in der oberen Lage höher ist als in der unteren Lage.

11. Folie gemäß Anspruch 10, **dadurch gekennzeichnet, dass** der Gehalt an Photokatalysator in der oberen Lage 5 bis 15 Gew.-% beträgt und in der unteren Lage 0,1 bis 10 Gew.-%.

12. Verwendung einer Folie gemäß einem der Ansprüche 1 bis 11 zur Kaschierung von Profilen für Fenster, Türen und andere der Witterung ausgesetzten Teilen, **dadurch gekennzeichnet, dass** die Oberfläche der Teile eine photokatalytische Aktivität aufweist.

13. Verwendung einer Folie gemäß einem der Ansprüche 1 bis 11 zur Herstellung von Planen, Markisen, Jalousien oder Schwimmbadauskleidungen.

14. Fensterprofil aus einem Profil auf Basis von Kunststoff, Holz und/oder Metall mit einer aufkaschierten Folie, **dadurch gekennzeichnet, dass** die Folie eine Folie gemäß mindestens einem der Ansprüche 1 bis 11 ist.

## Claims

1. Weather-resistant film comprising a substrate layer, a barrier layer and a surface layer based on a polymethacrylate, **characterized in that** the surface layer contains 0.1 to 15 % by weight of a photocatalyst, based on the total weight of the layer.

2. Film according to claim 1, **characterized in that** the substrate layer is a layer, which can be connected to a profile made of plastic, wood, metal or two or more of said materials.

3. Film according to claim 1 or 2, **characterized in that** the substrate layer is based on polyvinyl chloride, acrylate polymer, styrene polymer, acrylonitrile-styrene-acrylate terpolymer, acrylonitrile-butadiene-styrene terpolymer, polyolefin or mixtures of different polyvinyl chlorides, acrylate polymers, styrene polymers, acrylonitrile-styrene-acrylate terpolymers, acrylonitrile-butadiene-styrene terpolymers, polyolefins or mixtures of said polymers.

4. Film according to claim 3, **characterized in that** the substrate layer consists of 65 to 100 parts by weight of polyvinyl chloride(s) with 0 to 35 parts by weight of plasticizier and per 100 parts by weight of this mixture, 1 to 5 parts by weight of stabilizer and/or 0.1 to 1.5 parts by weight of lubricant as well as 1.0 to 15 parts by weight of pigment or pigment mixture.

5. Film according to claim 3, **characterized in that** the substrate layer consists of 100 parts by weight of polymethacrylate or a mixture of polymethacrylates and 1 part by weight of antioxidants and/or 1 part by weight of lubricant as well as 1 to 15 parts by weight of pigment or pigment mixture.

6. Film according to at least any one of claims 1 to 5, **characterized in that** the barrier layer is based on a polymethacrylate.

7. Film according to at least any one of claims 1 to 6, **characterized in that** the barrier layer contains one or more UV radiation-absorbing substances and/or other additives.

8. Film according to claim 6, **characterized in that** the barrier layer consists of 100 parts by weight of polymethyl methacrylate as well as 1 to 10 parts by weight of UV absorber or UV absorber mixture and optionally 1-5 parts by weight of additives and/or 1-10 parts by weight of fillers.

9. Film according to at least one of claims 1 to 8, **characterized in that** the surface layer consists of 100 parts by weight of polymethacrylate or mixtures of polymethyl methacrylate with other polymethacrylates and 1 to 10 parts by weight of photocatalyst as well as optionally 1-5 parts by weight of additives and/or 1-10 parts by weight of fillers.

10. Film according to at least one of claims 1 to 9, **characterized in that** the surface layer is composed of two layers, wherein the content of photocatalyst in the upper layer is higher than in the lower layer.

11. Film according to claim 10, **characterized in that** the content of photocatalyst is 5 to 15 % by weight in the upper layer and 0.1 to 10 % by weight in the lower layer.

12. Use of a film according to any one of claims 1 to 11 for covering profiles for windows, doors and other parts, which are subjected to the weather, **characterized in that** the surface of the parts comprises a photocatalytic activity.

13. Use of a film according to any one of claims 1 to 11 for producing tarps, awnings, blinds or swimming pool linings.

14. Window profile of a profile on the basis of plastic, wood and/or metal comprising a laminated film, **characterized in that** the film is a film according to at least any one of claims 1 to 11.

## Revendications

1. Feuille résistant aux intempéries, comprenant une couche de substrat, une couche de blocage et une couche de surface à base d'un polyméthacrylate, **caractérisée en ce que** la couche de surface contient 0,1 à 15% en poids d'un photocatalyseur par rapport au poids total de la couche.

2. Feuille selon la revendication 1, **caractérisée en ce que** la couche de substrat est une couche pouvant être assemblée avec un profilé en matériau synthétique, bois, métal ou deux ou plusieurs des matériaux mentionnés.

3. Feuille selon la revendication 1 ou 2, **caractérisée en ce que** la couche de substrat est à base de poly(chlorure de vinyle), de polymère d'acrylate, de polymère de styrène, de terpolymère d'acrylonitrile-styrène-acrylate, de terpolymère d'acrylonitrile-butadiène-styrène, de polyoléfine ou de mélanges de différents poly(chlorures de vinyle), différents polymères d'acrylate, différents polymères de styrène, différents terpolymères d'acrylonitrile-styrène-acrylate, différents terpolymères d'acrylonitrile-butadiène-styrène, différentes polyoléfines ou différents mélanges des polymères mentionnés.

4. Feuille selon la revendication 3, **caractérisée en ce que** la couche de substrat est constituée par 65 à 100 parties en poids de poly(chlorure(s) de vinyle) avec 0 à 35 parties en poids de plastifiant et, par rapport à 100 parties en poids de ce mélange, par 1 à 5 parties en poids de stabilisateur et/ou par 0,1 à 1,5 partie en poids de lubrifiant ainsi que par 1,0 à 15 parties en poids de pigment ou de mélange de pigments.

5. Feuille selon la revendication 3, **caractérisée en ce que** la couche de substrat est constituée par 100 parties en poids de polyméthacrylate ou d'un mélange de polyacrylates et par 1 partie en poids d'antioxydants et/ou 1 partie en poids de lubrifiant ainsi que par 1 à 15 parties en poids de pigment ou de mélange de pigments.

6. Feuille selon au moins l'une quelconque des revendications 1 à 5, **caractérisée en ce que** la couche de blocage est à base d'un polyméthacrylate.

7. Feuille selon au moins l'une quelconque des revendications 1 à 6, **caractérisée en ce que** la couche de blocage contient une ou plusieurs substances absorbant le rayonnement UV et/ou d'autres additifs.

8. Feuille selon la revendication 6, **caractérisée en ce que** la couche de blocage est constituée par 100 parties en poids de poly(méthacrylate de méthyle) ainsi que par 1 à 10 parties en poids d'absorbant des UV ou de mélange d'absorbants des UV et le cas échéant par 1-5 parties en poids d'additifs et/ou 1-10 parties en poids de charges.

9. Feuille selon au moins l'une quelconque des revendications 1 à 8, **caractérisée en ce que** la couche de surface est constituée par 100 parties en poids de poly(méthacrylate de méthyle) ou de mélanges de poly(méthacrylate de méthyle) avec d'autres polyméthacrylates et par 1 à 10 parties en poids de photocatalyseur ainsi que le cas échéant par 1-5 parties en poids d'additifs et/ou 1-10 parties en poids de charges.

10. Feuille selon au moins l'une quelconque des revendications 1 à 9, **caractérisée en ce que** la couche de surface présente une structure à deux couches, la teneur en photocatalyseur dans la couche supérieure, étant supérieure à celle dans la couche inférieure.

11. Feuille selon la revendication 10, **caractérisée en ce que** la teneur en photocatalyseur dans la couche supérieure est de 5 à 15% en poids et dans la couche inférieure de 0,1 à 10% en poids.

12. Utilisation d'une feuille selon l'une quelconque des revendications 1 à 11 pour le contrecollage de profilés pour fenêtres, portes et autres pièces exposées aux intempéries, **caractérisée en ce que** la surface des pièces présente une activité photocatalytique.

13. Utilisation d'une feuille selon l'une quelconque des revendications 1 à 11 pour la fabrication de bâches, de marquises, de jalousies ou de revêtements de piscines.

14. Profilé de fenêtre, constitué par un profilé à base de matériau synthétique, de bois et/ou de métal avec une feuille contrecollée, **caractérisé en ce que** la feuille est une feuille selon au moins l'une quelconque des revendications 1 à 11.
